Europäisches Patentamt

European Patent Office

Office européen des brevets

(11) Numéro de publication : **0 505 421 B1**

(12) **FASCICULE DE BREVET EUROPEEN**

(45) Date de publication du fascicule du brevet :
**02.03.94 Bulletin 94/09**

(51) Int. Cl.[5] : **G01N 27/82**

(21) Numéro de dépôt : **91900838.3**

(22) Date de dépôt : **11.12.90**

(86) Numéro de dépôt international :
**PCT/FR90/00901**

(87) Numéro de publication internationale :
**WO 91/09305 27.06.91 Gazette 91/14**

(54) **PROCEDE DE DETECTION ET DE DIMENSIONNEMENT DE FISSURES DANS DES STRUCTURES METALLIQUES MAILLEES.**

(30) Priorité : **12.12.89 FR 8916393**

(43) Date de publication de la demande :
**30.09.92 Bulletin 92/40**

(45) Mention de la délivrance du brevet :
**02.03.94 Bulletin 94/09**

(84) Etats contractants désignés :
**DE DK ES GB IT NL SE**

(56) Documents cités :
**EP-A- 0 134 341
FR-A- 2 611 276
US-A- 4 388 593
US-A- 4 492 115
Proceedings of the IEEE, Vol. 67, No. 6, June 1979, (New York, US), J.R. Wait: "Review of electromagnetic methods in nondestructive testing of wire ropes", pages 892-903 see page 892, column 2, lines 28-37; page 895, column 1, lines 7-14; page 899, column 2, line 11 - page 902, column 2, line 5; figures 1a,3,5,6,13-16
Patent Abstracts of Japan, Vol. 11, No. 340 (P-634)(2787), 07 November 1987, & JP, A, 62123352
Patent Abstracts of Japan, Vol. 10, No. 97 (P-446)(2154), 15 April 1986, & JP, A, 60230053**

(73) Titulaire : **COMMISSARIAT A L'ENERGIE ATOMIQUE
31-33, rue de la Fédération
F-75015 Paris (FR)**

(72) Inventeur : **GIORDANO, Patrice
12, rue Général-Durand
F-38100 Grenoble (FR)**
Inventeur : **GUILHAMAT, Bernard
Les Fourcoules
F-38590 Saint-Michel-de-Saint-Jeoires (FR)**
Inventeur : **ITTEL, Jean-Michel
Le Crêt du Faure Le Grand-Pariset
F-38170 Seyssinet-Pariset (FR)**
Inventeur : **POUJOIS, Robert
Chemin du Jaillet Sinard
F-38650 Monestier-de-Clermont (FR)**
Inventeur : **ROBACH, Francis
39 Franquières
F-38330 Biviers (FR)**

(74) Mandataire : **Dubois-Chabert, Guy
c/o BREVATOME 25, rue de Ponthieu
F-75008 Paris (FR)**

Jouve, 18, rue Saint-Denis, 75001 PARIS

## Description

La présente invention a pour objet un procédé de détection à distance de fissures dans des structures métalliques maillées conductrices de l'électricité ainsi que le dimensionnement de ces fissures.

Ces structures métalliques sont constituées d'éléments structuraux tels que des tubes et des poutrelles, en métal conducteur magnétique, définissant des boucles ou des circuits électriques assurant une continuité électrique. Les dimensions et les formes de ces éléments structuraux sont très variées.

Les structures métalliques auxquelles s'applique l'invention peuvent comporter un ou plusieurs circuits électriques fermés ; elles constituent ce que l'on appelle des structures maillées. Ces structures sont en particulier les pylônes de soutien des plates-formes pétrolières en mer, les pylônes haute tension constitués d'un entrelac de poutrelles, une raffinerie possédant des réseaux de tuyaux conducteurs, ou encore des réservoirs fermés.

La détection des fissures dans une structure maillée constitue un premier niveau d'inspection de ces structures et le dimensionnement de ces fissures constitue un niveau d'inspection plus élevé.

Les techniques actuellement connues de détection de fissures dans une structure métallique sont basées sur la magnétoscopie, les ultrasons, les différences de potentiel, les courants de Foucault et la radiographie. Ces techniques présentent toutes leurs avantages et leurs inconvénients.

La magnétoscopie est basée sur la mise en évidence de discontinuités magnétiques dans une structure conductrice grâce à l'accumulation de particules ferromagnétiques fluorescentes en regard des fissures, lors de l'application d'un courant électrique continu dans la structure ; elle assure une bonne localisation des défauts de surface de la structure, ce qui fait que cette technique est actuellement la plus utilisée.

Malheureusement, cette technique ne permet pas de dimensionner la profondeur du défaut et donc d'apprécier son importance.

Par ailleurs, dans le domaine de l'inspection de structures pétrolières en mer, il est nécessaire d'effectuer un nettoyage très soigné du métal avant de pouvoir effectuer la détection des éventuelles fissures par magnétoscopie. La nécessité de nettoyer les zones de la structure à inspecter de toute incrustation marine et de revêtement anti-corrosif augmente de façon considérable le temps de l'inspection ainsi que son coût. En outre, ce nettoyage effectué à l'aide de brosses métalliques rotatives ou de jets d'eau à haute pression est une tâche difficile.

La technique utilisant les ultrasons consiste à induire des ultrasons dans la zone à inspecter puis à détecter les ondes renvoyées par la structure ; cette technique permet la localisation tout aussi bien des défauts de surface que des défauts internes. Elle rend possible le dimensionnement des fissures de 3 mm de profondeur minimum. Elle constitue donc une analyse complémentaire de la magnétoscopie.

Malheureusement, sa mise en oeuvre est très délicate tant du point de vue de la manipulation que du point de vue de l'interprétation, ce qui nécessite l'intervention d'opérateurs très qualifiés.

En outre, cette technique d'ultrasons nécessite aussi un nettoyage approfondi des zones de la structure à inspecter avant de pouvoir détecter puis dimensionner les éventuelles fissures.

La technique radiographique consiste à enregistrer, sur un film photographique, les zones de la structure métallique à inspecter à l'aide de rayonnements X ou gamma ; elle permet une détection de fissures et d'autres défauts internes avec une bonne localisation de ces défauts.

Malheureusement, cette technique présente de gros problèmes de mise en oeuvre, en particulier dans le domaine de l'inspection sous-marine, des problèmes de protection des opérateurs, ainsi qu'une analyse difficile, voire impossible, des résultats obtenus dans le cas de structures complexes.

La technique basée sur la mesure de différence de potentiels entre deux points d'une structure conductrice utilise des courants alternatifs injectés dans la structure ; elle permet d'enregistrer les changements d'impédance dus aux défauts de surface. S'il existe une fissure entre ces deux points, les lignes de courant vont la contourner, provoquant ainsi une augmentation d'impédance et donc de potentiel.

Les fréquences utilisées sont comprises entre 50 Hz et 1 MHz et deux mesures de potentiel suffisent pour déterminer la profondeur de la fissure. Cette technique est décrite en particulier dans le document NDT International, vol 16, n°3, juin 1983, p. 139-143 de A.A. Aboutorabi et M.J. Crowling "Measurement of crack profile of semi-elliptical surface cracks using the AC potential technique".

La mesure de différence de potentiels permet le dimensionnement de fissures de 1 mm de profondeur minimum et de 100 à 200 mm de longueur. Elle est utilisée généralement en complément de la magnétoscopie, après avoir détecté la présence de fissures par cette dernière.

Malheureusement, comme pour les techniques précédentes, elle nécessite un nettoyage poussé de la zone de la structure contrôler. En outre, la précision et la reproductibilité de cette méthode sont parfois douteuses. Cette technique est donc peu fiable.

La technique utilisant les courants de Foucault permet une détection et un dimensionnement des éventuelles fissures d'une structure installée en mer en présence de salissures marines, à l'inverse des techniques précédentes. Cette technique est notamment décrite dans le document Eddy Current Testing manual, vol. 1" de V.S. Cecco et al., Atomic Energy of Canada, AECL 7523 de 1981, p. 1-185.

Elle consiste placer près de l'élément structural à inspecter une bobine parcourue par un courant alternatif de haute fréquence (de 10 à 100 kHz). Le flux magnétique engendré par la bobine donne naissance à des courants induits (ou courants de Foucault) dans la pièce à analyser qui vont produire un champ magnétique s'opposant au champ magnétique de la bobine. Ce champ magnétique induit va créer un changement d'impédance aux bornes de la bobine que l'on va mesurer.

Cette mesure peut être également effectuée à l'aide d'une bobine supplémentaire (bobine réceptrice), la première bobine jouant alors uniquement le rôle de bobine émettrice.

Les essais de surface de cette technique sont actuellement concluants, mais il n'en est pas de même pour les opérations sous-marines. Par ailleurs, cette technique n'est pas agréée par les autorités compétentes.

En outre, le fonctionnement à très haute fréquence limite la circulation du courant induit dans les zones à inspecter à une tranche de métal très superficielle (inférieure à 1 mm) ; cette méthode est donc très sensible aux effets de surface et ne permet pas de repérer un défaut interne. En particulier, elle ne permet pas de différencier une rayure de surface insignifiante d'une fissure, ce qui entraîne notamment une perte de temps lors d'une inspection complète des structures.

Par ailleurs, pour des raisons d'efficacité, l'émetteur et le récepteur doivent être placés le plus près possible de la zone à inspecter ; ceci nécessite la réalisation d'une tête de mesure miniaturisée pour accéder en particulier aux soudures entre deux éléments structuraux, ce qui complique sa fabrication et limite les courants appliqués à l'émetteur. En outre, l'émetteur et le détecteur sont très sensibles à la distance les séparant du métal, ce qui nécessite de placer le plus près possible la tête de mesure de l'élément de structure à contrôler.

Par ailleurs, il est connu par l'article de J.R. Wait (Proceedings of the IEEE, vol. 67, n°6, p. 892-903, "Review of electromagnetic methods in non destructive testing of wire ropes") d'exciter un cylindre infini conducteur par un solénoïde axé sur le cylindre, parcouru par un courant. Le conducteur constitue un circuit électrique ouvert. A l'aide d'une bobine de mesure placée au voisinage de la bobine émettrice, on détermine soit la variation d'impédance de la bobine d'excitation, soit une anomalie de champ magnétique perçue à peu de distance de l'excitation.

Les observations au voisinage du tore d'excitation sont délicates ; un décentrage du tore d'excitation ou une discontinuité du circuit magnétique se répercute dans le champ proche. Les observations doivent tenir compte de ces réalités.

L'invention a donc pour objet un procédé de détection et de dimensionnement de fissures transversales dans des structures métalliques conductrices permettant de remédier aux différents inconvénients mentionnés ci-dessus. Elle permet en particulier une détection et un dimensionnement à distance des fissures, sans nettoyage préalable des zones à inspecter. De plus, ce procédé assure une différenciation entre les défauts de surface et les fissures débouchantes ou non de la structure métallique. En outre, les observations sont facilitées.

De façon plus précise, l'invention a pour objet un procédé de détection et de dimensionnement d'une fissure dans une structure métallique maillée conductrice de l'électricité comportant des éléments structuraux constituant un circuit électrique fermé, ce procédé consistant à :

- entourer l'un des éléments structuraux avec au moins un circuit magnétique fermé en forme de pince,
- former au moins un transformateur en enroulant un bobinage sur une partie du circuit magnétique pour constituer le circuit primaire, la structure métallique maillée constituant le circuit secondaire de ce transformateur,
- alimenter en courant alternatif ou impulsionnel basse fréquence le circuit primaire du transformateur à l'aide d'au moins un circuit d'alimentation électrique pour créer longitudinalement dans l'élément structural à contrôler un courant électrique alternatif ou impulsionnel basse fréquence de forte intensité grâce au transformateur,
- déplacer au moins un capteur magnétique le long de l'élément à contrôler, et
- mesurer le champ magnétique induit par le courant électrique circulant dans le circuit électrique fermé, à l'aide dudit capteur.

On entend par fissure transversale, toute fissure ayant une composante transversale par rapport à la circulation du courant au voisinage de la fissure. Par ailleurs, le capteur peut se déplacer sans contact avec la structure à contrôler, en particulier lorsqu'elle est recouverte de salissures, ou directement sur la structure.

Le procédé de l'invention permet une détection rapide et un dimensionnement de fissures même approximatif, simultanés, contrairement aux dispositifs de l'art antérieur. En outre, il permet une détection et un dimensionnement à une distance (ou survol) supérieure à celles utilisées dans l'art antérieur, par exemple à une distance de plusieurs centimètres.

Ce procédé permet en particulier la détection de fissures dans des structures pétrolières, sous recouvrement de salissures marines ; il est tout à fait adapté à l'inspection sous-marine. La conductivité de l'eau de mer n'a pratiquement aucune incidence sur la répartition des champs magnétiques et le courant dans la structure maillée.

L'utilisation d'un transformateur dont le secondaire est constitué par la structure métallique maillée à analyser permet la circulation de courant électrique très intense (>10A) dans la structure et donc d'induire des champs magnétiques élevés, facilitant ainsi leur détection par le ou les capteurs magnétiques. Par ailleurs, les puissances électriques mises en jeu sont inférieures à 5kW ; le coût énergétique est donc faible.

Le champ magnétique produit à l'intérieur d'un élément structural (tube ou poutre), loin des noeuds de la structure maillée où plusieurs éléments structuraux viennent se réunir, est identique à celui qu'engendre le même courant circulant au niveau de l'axe de l'élément structural.

Autrement dit, le champ magnétique $\vec{H}$ varie avec la distance r à l'axe de l'élément structural selon l'équation :

$$d\vec{H}/\vec{H} = -\,dr/r$$

où $d\vec{H}$ et dr représente respectivement les variations du champ magnétique et les variations de la distance à l'axe de l'élément.

Aussi, une fissure transversale dans cet élément structural provoque une perturbation dans la circulation du courant électrique qui se répercute dans la distribution du champ magnétique induit au voisinage de cet élément structural ; une fissure joue le rôle d'un isolant électrique.

La connaissance de la distribution spatiale du champ magnétique permet de retrouver les caractéristiques (longueur et profondeur) de la fissure.

La détection par le ou les capteurs d'une perturbation du champ magnétique permet de déterminer le positionnement de la fissure à partir du positionnement du ou des capteurs ; (autrement dit, lorsque l'on sait où se trouve le capteur, on sait où se trouve la fissure).

La perturbation du champ magnétique au voisinage de l'élément structural, résultant de la présence d'une fissure, vient s'inscrire sur la répartition "normale" du champ magnétique, ce qui nécessite de dissocier la partie "anormale" (due à la fissure) de la partie "normale" (due à la forme et aux dimensions de la structure exempt de fissure) de la distribution de champ magnétique.

L'effet de la fissure est caractérisé par des anomalies d'amplitude et de longueur d'onde dans le signal détecté. Aussi, il est possible d'utiliser la différence de longueur d'onde entre la distribution "normale" et la distribution "anormale" pour dissocier ces deux effets.

La séparation des distributions "normale" et "anormale" se fonde sur une analyse spectrale.

Cette opération est généralement délicate en particulier si le capteur de champ magnétique opère au-dessus d'un élément structural recouvert de salissures, car il devient difficile de positionner correctement ce capteur au voisinage de la fissure. L'utilisation d'un seul capteur permet donc la détection de la fissure mais pose quelques problèmes en ce qui concerne son dimensionnement.

Aussi, il est préférable d'utiliser plusieurs capteurs magnétiques, disposés à proximité de la fissure lors du dimensionnement. L'utilisation de plusieurs capteurs permet en outre d'augmenter la vitesse de détection par rapport à un seul capteur.

Ces capteurs magnétiques ont en particulier leur axe de mesure orienté dans la même direction et sont placés selon une barrette ou une grille, orientée parallèlement à l'élément de structure à contrôler, aussi bien pour la détection que pour le dimensionnement.

Ces capteurs sont en particulier des capteurs inductifs. Ce type de capteur a l'avantage de présenter une grande sensibilité. En revanche, leur intégration dans un réseau de capteurs est délicate. Il est aussi possible d'utiliser des capteurs MOS ou MI (metal/oxyde/semi-conducteur ou metal/isolant) dont l'intégration dans un réseau de capteurs est aisée mais dont la sensibilité est plus faible que celle des capteurs à induction. Le choix des détecteurs dépend de la précision souhaitée par l'utilisateur pour la mesure.

L'utilisation d'un réseau de capteurs permet en outre d'augmenter la sensibilité du dispositif, pris en son ensemble. En outre, elle permet une cartographie à un instant donné du champ magnétique.

De l'ensemble des données obtenues, on peut extraire une information normale qui traduit une répartition du champ magnétique relative du type I/2πr, où r représentent la distance séparant le réseau de capteurs de l'axe de l'élément structural contrôlé et I représente l'intensité de courant circulant dans l'élément.

La perturbation introduite par la fissure ne peut être analysée que lorsque les capteurs magnétiques se situent au voisinage de la fissure. Aussi, après avoir détecté la présence d'une fissure, puis positionné le réseau de capteurs par rapport à cette fissure, grâce à l'information contenue dans la partie "normale" de la distribution de champ magnétique, on peut effectuer un dimensionnement de cette fissure, par cartographie "aérienne" (c'est-à-dire à distance).

Les salissures présentes sur la fissure ne modifient pas la répartition du champ magnétique.

Au niveau des noeuds de la structure maillée, l'effet de fissure, et donc la détection de cette dernière, devient plus compliqué. En particulier la répartition du courant et la géometrie des surfaces deviennent plus complexes et il est difficile d'extraire l'effet de fissure de celui des effets magnétiques dus à l'existence de ces noeuds, lorsqu'on utilise une seule fréquence basse d'excitation du transformateur.

Aussi, afin d'assurer une distinction entre les effets magnétiques dus aux noeuds de la structure maillée et ceux dus à la présence d'une fissure, on délivre des courants d'excitation de fréquence différente dans l'élément à contrôler. Les circuits d'alimentation électrique délivrant ces courants peuvent assurer l'alimentation électrique simultanément d'un même bobinage d'un circuit (ou pince) magnétique par l'intermédiaire d'un circuit sommateur ou bien simultanément de plusieurs bobinages d'un même circuit magnétique ou de plusieurs circuits magnétiques disposés à différents endroits de la structure à contrôler et en particulier sur le même élément structural.

Le dispositif destiné à la mise en oeuvre de l'invention peut donc comporter plusieurs transformateurs alimentés par des courants de fréquence différente.

L'utilisation de deux fréquences suffit pour extraire l'effet de fissure au niveau des noeuds de la structure. Il est toutefois possible d'utiliser plus de deux fréquences différentes.

En effet, les fissures sont sensibles à la fréquence d'excitation de la structure maillée, cette fréquence intervenant sur la profondeur de pénétration des lignes de courant dans le métal et donc sur la distribution du champ magnétique tandis que les concentrations de courant en dehors des fissures et en particulier au niveau des noeuds ont la même signature magnétique aux différentes fréquences.

Par ailleurs, pour la détection des fissures au niveau des noeuds d'une structure maillée, on utilise de façon avantageuse plusieurs pinces magnétiques injectant respectivement dans la structure, par l'intermédiaire de bobines, des courants mono ou multifréquences d'amplitude identique ou différente mais de fréquence identique.

La complexité des champs magnétiques primaires et des détails technologiques pratiques rendent délicates Les observations au voisnage de la pince excitatrice. Aussi, on effectue la détection à une certaine distance de la pince excitatrice, et en particulier à une longueur, mesurée selon l'axe longitudinal de l'élément à contrôler, supérieure à 5 ou 6 fois le rayon de l'élément à contrôler lorsque ce dernier est cylindrique. La distribution de champ magnétique est celle associée à un courant uniforme dans un cylindre infini (avec effet de peau) ; ceci est beaucoup plus facile que dans la méthode de Wait citée précédemment.

Pour un noeud donné, ces pinces sont disposées sur des mailles distinctes de la structure maillée comportant des éléments structuraux communs, le noeud étant commun à ces différentes mailles. Ces pinces sont au moins au nombre de deux et sont disposées sur des éléments structuraux distincts des éléments structuraux communs. Ces pinces permettent d'agir sur la répartition des courants dans le noeud et de détecter ainsi des fissures dans n'importe quelle direction, les fissures pouvant toujours présenter alors une composante transversale par rapport aux lignes de courant.

De façon avantageuse, la détection des champs magnétiques induits dans la structure est effectuée de façon synchrone avec l'alimentation en courants de cette structure.

Par ailleurs, des circuits de réglage sont avantageusement prévus pour régler les intensités des courants d'excitation de façon qu'elles soient égales ou quasi-égales.

Les basses fréquences utilisées sont fonction du matériau constituant la structure maillée. Elles sont telles que la self de la structure maillée soit négligeable par rapport à sa résistance électrique. Elles sont choisies avantageusement dans l'intervalle allant de 0,1 à 10000 Hz et par exemple de 1000 à 2000 Hz. Les matériaux utilisés sont essentiellement des aciers et du fer. Toutefois, l'invention s'applique à tout matériau conducteur de l'électricité, même faiblement magnétique.

L'utilisation de fréquences différentes permet une pénétration différente du courant dans le métal.

La fréquence la plus basse doit être, selon l'invention, choisie de manière à réaliser une pénétration $\underline{d}$ du courant du même ordre de grandeur que l'épaisseur de l'élément structural (effet de peau) ; autrement dit $d = \sqrt{2/w\mu\sigma}$, où $w=2\pi f$, $\sigma$ représente la conductivité électrique du métal constituant l'élément structural et $\mu$ représente sa perméabilité magnétique.

Au niveau d'une fissure, le comportement des courants de diverses fréquences est différent. En effet, plus la fréquence du courant d'excitation est basse et plus la profondeur de pénétration de ce courant est élevée. Aussi, la circulation des courants dans la structure maillée est affectée de façon différente. Il en résulte des répartitions de champs magnétiques différentes au niveau des fissures.

Ainsi, avec un réseau de capteurs, on peut restituer des cartographies normalisées de ces répartitions de champs magnétiques à un instant donné (autant de cartographies que de fréquences utilisées).

La différence de ces cartographies est représentative des effets de fissures perçues de façon différente aux différentes fréquences, la partie "normale" de ces distributions de champs magnétiques étant vue de la même façon par les capteurs, lorsque les courants d'excitation ont la même intensité ou une intensité voisine ; il en résulte donc un effet différentiel nul de la partie "normale" de la distribution de champs magnétiques. Cette technique multifréquence permet donc d'extraire l'effet de fissure en éliminant la partie "normale" de la distribution de champs magnétiques.

Conformément à l'invention, on effectue d'abord une détection de la fissure par déplacement du ou des capteurs magnétiques parallèlement à l'élément structural à contrôler et à une distance donnée de cet élément de façon à balayer la totalité de sa surface. Ce déplacement peut être assuré manuellement, ou mieux, de façon automatique afin de garder fixe la distance séparant le ou les capteurs de l'élément structural à analyser. Ensuite, on effectue le dimensionnement de la fissure en maintenant le ou les capteurs à proximité de la fissure et à distance.

Pour des fréquences très basses (par exemple de l'ordre de 0,1 Hz) pour permettre le dimensionnement, il est préférable de maintenir ces capteurs fixes pendant la mesure.

La détection et le dimensionnement peuvent être également effectué simultanément.

En dehors des noeuds, une détection monofréquence peut être suffisante alors qu'à proximité des noeuds, une détection multifréquence est nécessaire.

En revanche, pour le dimensionnement d'une fissure, quel que soit son emplacement, on utilise plusieurs fréquences.

En outre, la détection et le dimensionnement peuvent être monocapteur, mais de préférence on utilise un réseau de capteurs pour gagner du temps d'inspection et permettre de mieux localiser les fissures.

Dans la pratique, on effectue tout d'abord une exploration rapide à haute fréquence (de l'ordre de 10000 Hz) et moyenne fréquence (de l'ordre de 2000 Hz) de la structure maillée puis un second passage plus minutieux à basse fréquence (0,1 à 2000 Hz) dans les zones critiques. Ensuite, on effectue le dimensionnement des fissures dans une large gamme de fréquences (0,1 Hz à 10000 Hz).

La technique de détection et de dimensionnement de fissures multifréquence est intéressante du fait de sa grande simplicité, de sa robustesse par rapport à l'environnement et de sa sensibilité aux fissures (différenciation entre les fissures et les défauts de surface).

Selon l'invention, les pinces ou circuits magnétiques présentent la forme d'un tore enserrant l'élément structural. Toutefois, une structure carrée pourrait être envisagée.

Lorsque le procédé de l'invention est destiné à la détection de fissures dans les structures pétrolifères en mer, il est préférable d'insérer entre chaque pince et l'élément structural correspondant, un matériau isolant électrique minimisant ainsi la circulation de courant électrique dans l'eau de mer.

Par ailleurs, afin d'assurer la flottabilité des pinces magnétiques, ces dernières sont avantageusement entourées d'un revêtement protecteur en isolant électrique.

Selon l'invention, les pinces magnétiques peuvent être disposées à demeure sur la structure maillée de façon à assurer un contrôle permanent, ou bien être installées juste au moment du contrôle. Dans ce cas, pour faciliter le montage de chaque pince autour de l'élément structural correspondant, celle-ci est constituée de deux parties destinées à être assemblées de façon à former un circuit magnétique fermé, une des deux parties étant équipée de l'enroulement primaire du transformateur.

D'autres caractéristiques et avantages de l'invention ressortiront mieux de la description qui va suivre, donnée à titre illustratif et non limitatif, en référence aux dessins annexés dans lesquels :

- la figure 1 représente un schéma d'ensemble du dispositif de mise en oeuvre du procédé de détection conforme à l'invention, monté sur une structure maillée,
- les figures 2A et 2B représentent une partie agrandie du dispositif de la figure 1 au niveau d'un transformateur, selon deux modes de réalisation,
- la figure 3 représente schématiquement l'électronique servant l'alimentation électrique bifréquence de bobines d'une même pince magnétique ainsi que l'électronique associée à un unique capteur magnétique pour la détection des champs magnétiques au voisinage de la structure maillée,
- la figure 4 représente schématiquement l'électronique servant à l'alimentation électrique des transformateurs de la figure 1 ainsi que l'électronique associée à un réseau de capteurs pour le dimensionnement par cartographie d'une fissure dans la structure maillée,
- les figures 5A, 5B et 5C donnent différents enregistrements des signaux délivrés par le dispositif de mise en oeuvre de l'invention, comportant un unique capteur magnétique, et
- la figure 6 représente une cartographie du champ magnétique au voisinage d'une fissure dans une structure maillée, établie avec le dispositif conforme à l'invention, comportant par exemple un réseau de capteurs magnétiques.

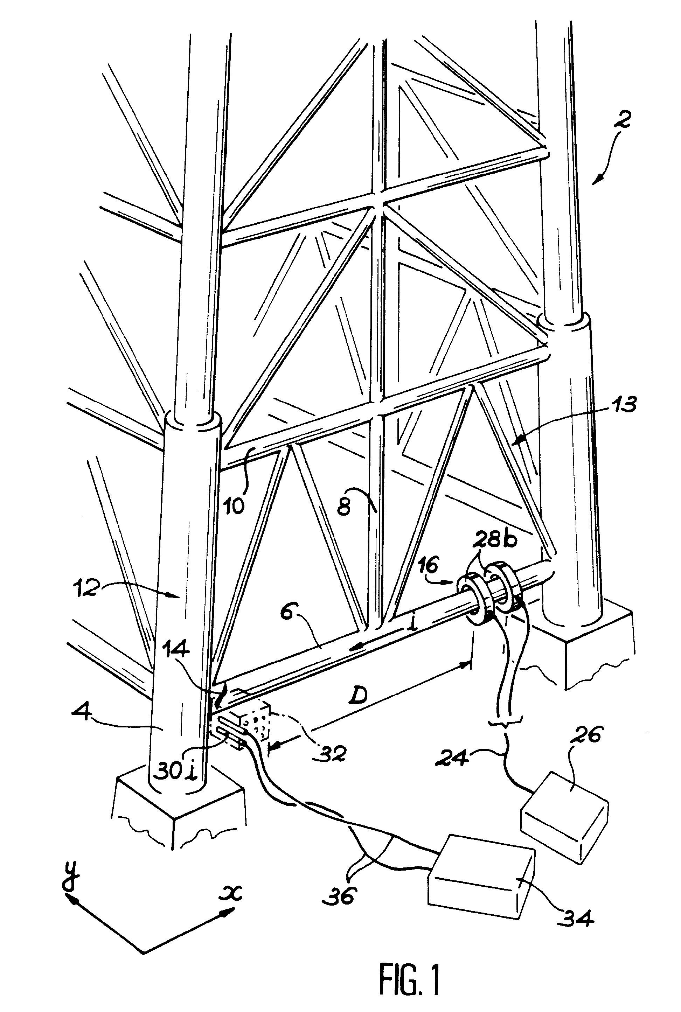

Sur la figure 1, on a représenté une structure maillée 2, conductrice de l'électricité équipee d'un dispositif de détection et de dimensionnement à distance d'une éventuelle fissure, conforme à l'invention. Cette structure comporte en particulier des tubes conducteurs magnétiques 4, 6, 8 et 10, entrecroisés et soudés de façon à assurer une continuité électrique, ces tubes constituant un circuit électrique fermé 12 représentant une des mailles de la structure métallique 2. La référence 13 représente une autre maille de la structure 2.

Pour un pylône de plate-forme pétrolière, les tubes ont un diamètre externe de 50 cm environ, une longueur de plusieurs mètres et sont réalisés en acier.

Sur la figure 1, on a représenté une fissure 14 transversale, portée par le tube 6 que l'on doit détecter et dimensionner.

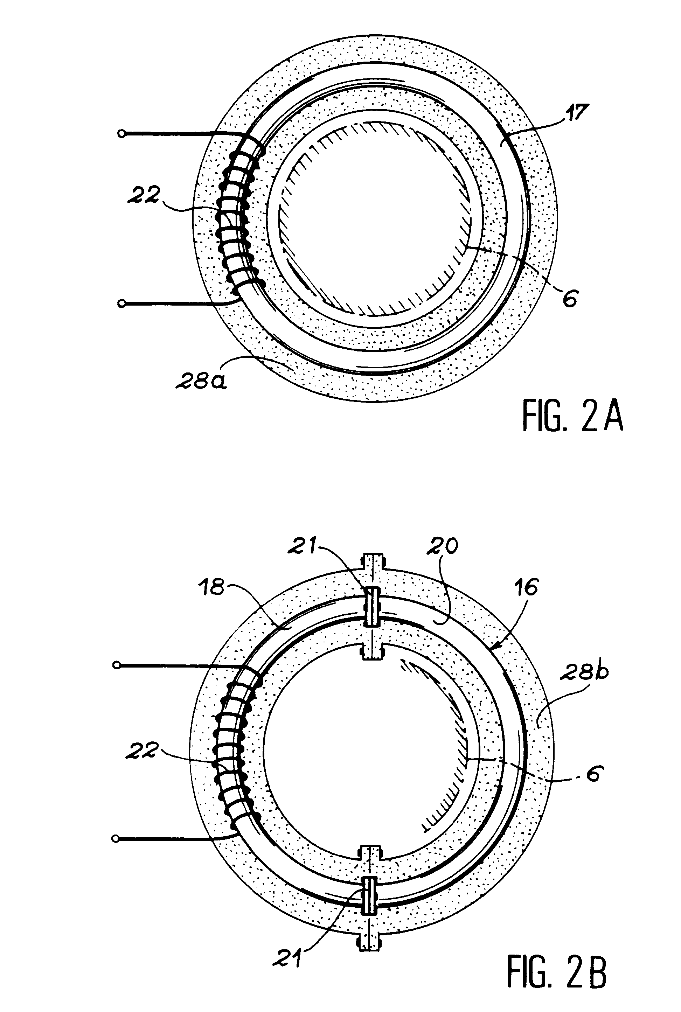

A cet effet, on monte sur le tube à contrôler 6 une ou deux pinces magnétiques ayant, comme représenté sur les figures 2A et 2B, la forme d'un tore 16 ou 17. Cette pince est montée autour du tube 6 et constitue un circuit magnétique fermé. Quelle que soit la réalisation précise de la pince magnétique, celle-ci est réalisée par exemple en fer doux dopé avec 4% de silicium.

Sur cette figure, pour contrôler le tube 6, la ou les pinces sont montées sur ce tube, mais elles auraient pu, tout aussi bien, être montées sur n'importe lequel des tubes 4, 6, 8 ou 10 de la même maille ou sur des tubes d'autres mailles, de préférence voisines pour des problèmes d'intensité de courant, mais incluant l'élément 6. En particulier, la ou les pinces peuvent être montées sur la maille 13, adjacente à la maille 12.

La pince magnétique peut être montée à demeure sur des tubes de la structure, ce qui correspond au mode de réalisation représente sur la figure 2A ou bien être démontable pour être placée, uniquement lors de la mesure, sur un tube, ce qui correspond au mode de réalisation représenté sur la figure 2B.

Dans le mode représenté sur la figure 2A, la pince magnétique 17 est monobloc ; son montage sur les tubes de la structure maillée se fait par simple enfilement sur ces tubes avant de les souder entre eux.

Pour des raisons de mise en place dans le mode de réalisation de la figure 2B, la pince magnétique 16 est constituée de deux parties 18 et 20 qui viennent s'assembler autour du tube 6 grâce à deux systèmes de serrage 21 dont la forme dépend du type d'intervention envisagée. En particulier, le montage de la pince peut être fait de façon automatique à l'aide d'un robot ou bien à l'aide d'un plongeur dans le cadre d'une inspection sous-marine.

Quelle que soit la forme de ce système de serrage, il doit assurer une continuité magnétique entre les parties 18 et 20 de la pince 16.

Selon l'invention, de préférence l'une des parties de la pince magnétique, par exemple la partie 18 dans le cas représenté sur la figure 2B, est équipée d'un bobinage 22 constituant le circuit primaire d'un transformateur, ce bobinage étant enroulé autour de ladite partie magnétique. La pince magnétique 16 ou 17 constitue le circuit magnétique du transformateur et le tube conducteur 6 constitue une partie du circuit secondaire de ce transformateur. Le secondaire du transformateur est constitué par l'ensemble de la structure métallique.

Le bobinage 22 est constitué d'un fil de cuivre de 0,5 mm de diamètre et comporte de 100 à 2000 tours et en particulier 1000 tours. Il est connecté à l'aide d'un câble d'alimentation 24 du type coaxial qui doit pouvoir se dérouler et s'enrouler lorsque la pince est destinée à être déplacée, à un circuit d'alimentation électrique 26 (figure 1) placée hors de l'eau, sur la plate-forme pétrolière.

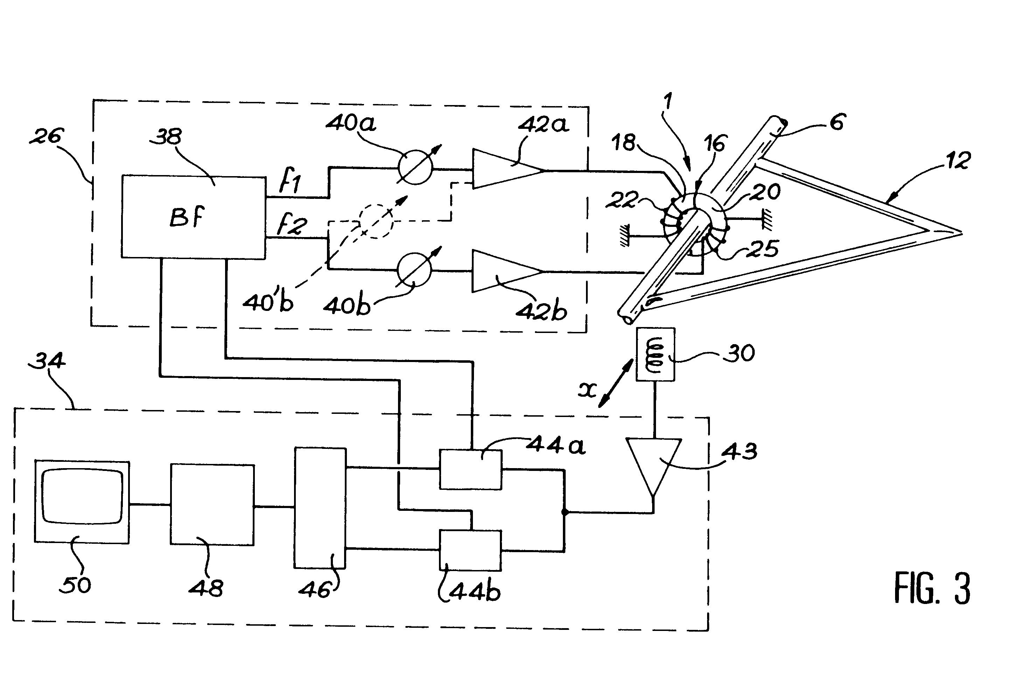

Il est aussi possible d'équiper la pince magnétique d'un second bobinage 25, comme représenté sur la figure 3, constituant avec la pince et le tube équipé de cette dernière un second transformateur, en vue d'injecter dans ce tube deux courants de fréquences différentes.

Afin d'assurer la flottabilité de la pince magnétique 16, 17, celle-ci est revêtue d'un matériau protecteur isolant par exemple en plastique souple tel que le polyéthylène.

Lorsque la pince magnétique 17 est destinée à rester fixée sur un tube particulier (voir figure 2A), ce revêtement protecteur a la forme d'un tore monobloc 28a non démontable.

En revanche, lorsque la pince 16 est destinée à être démontée, le matériau de protection, reférence 28b sur la figure 2B, est alors constitué de deux parties qui viennent s'assembler sur la pince 16 ; la fixation de ces deux parties est assurée par le système 21, accessible de l'extérieur de l'ensemble pince-isolant. La partie externe du système de fixation 21 doit être de préférence réalisée en matériau isolant électrique afin d'empêcher tout contact de l'eau de mer avec le circuit primaire 22 du transformateur.

Le matériau isolant monobloc 28a ou en deux parties 28b permet en outre de combler l'espace situé entre la pince magnétique et le tube 6, de façon à minimiser la circulation de courant électrique dans l'eau de mer.

Les éventuelles fissures à détecter étant généralement situées à proximité des soudures entre les tubes de la structure maillée 2, la ou les pinces magnétiques équipées de leurs enroulements primaires et du matériau isolant 28a ou 28b sont placées de préférence à proximité de ces soudures appelées aussi noeuds de la structure, comme représenté sur la figure 1.

Selon l'invention, le circuit électronique 26 assure l'alimentation en courants alternatifs ou impulsionnels du ou des circuits primaires 22, 25 des transformateurs et donc la production à l'intérieur du tube 6 de courants intenses alternatifs ou impulsionnels $i$ supérieurs de préférence à 10 A.

Pour un rapport de transformation de 1000, les courants circulant dans le tube sont 1000 fois plus grands que les courants d'excitation injectés dans l'enroulement primaire.

Les courants électriques injectés dans la structure métallique circulent dans le sens longitudinal x du tube 6 (figure 1) et induisent des champs magnétiques alternatifs ou impulsionnels au voisinage du tube à contrôler 6 que l'on détecte avec un réseau de capteurs $30i$, avec i un entier allant par eemple de 1 à 100, ou un unique capteur 30 (figure 3).

Les capteurs magnétiques sont en particulier des capteurs inductifs tels que des bobines à air de plusieurs milliers de tours de fil, de diamètre inférieur à 0,1 mm.

Dans un réseau de capteurs $30i$, ces derniers sont orientés dans la même direction, le réseau étant grossièrement parallèle à la surface à contrôler. Ces capteurs $30i$ sont supportés par un bloc support isolant 32, de façon à former un ensemble solidaire que l'on peut déplacer. Ces capteurs sont disposés dans ce support selon une matrice ou une grille. Pour fixer les idées, le pas de la matrice est de 5 mm, la surface du bloc 32 selon la direction x est de 25 cm$^2$, ce qui

permet d'utiliser 10x10 capteurs magnétiques.

Selon l'invention, la distance D séparant la matrice de capteurs et la bobine d'excitation la plus proche est supérieure à 5 ou 6 fois le rayon de l'élément à contrôler, ici l'élément 6.

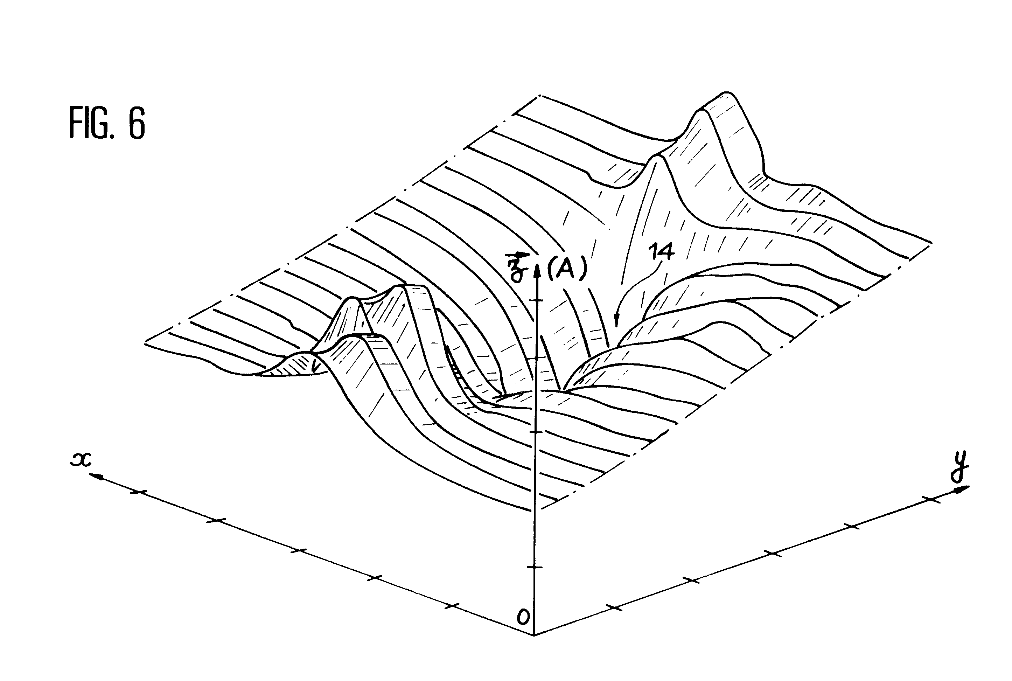

Ces capteurs sont reliés à une électronique de traitement 34 permettant en particulier l'établissement d'une cartographie (figure 6), à un instant donné, des champs magnétiques induits dans le tube 6 en regard du réseau de capteurs.

La connexion des capteurs 30i à l'électronique 34 de mesure est assurée par des câbles 36 capables d'être enroulés et déroulés au fur et à mesure des déplacements du réseau de capteurs 30i, le long du tube 6 à contrôler (direction x), lors de la détection de fissures.

Ces capteurs sont situés à distance du tube à contrôler et sont donc sans contact avec la structure maillée 2. La distance séparant les capteurs 30i du tube 6 à contrôler et de 2 à 30 mm environ.

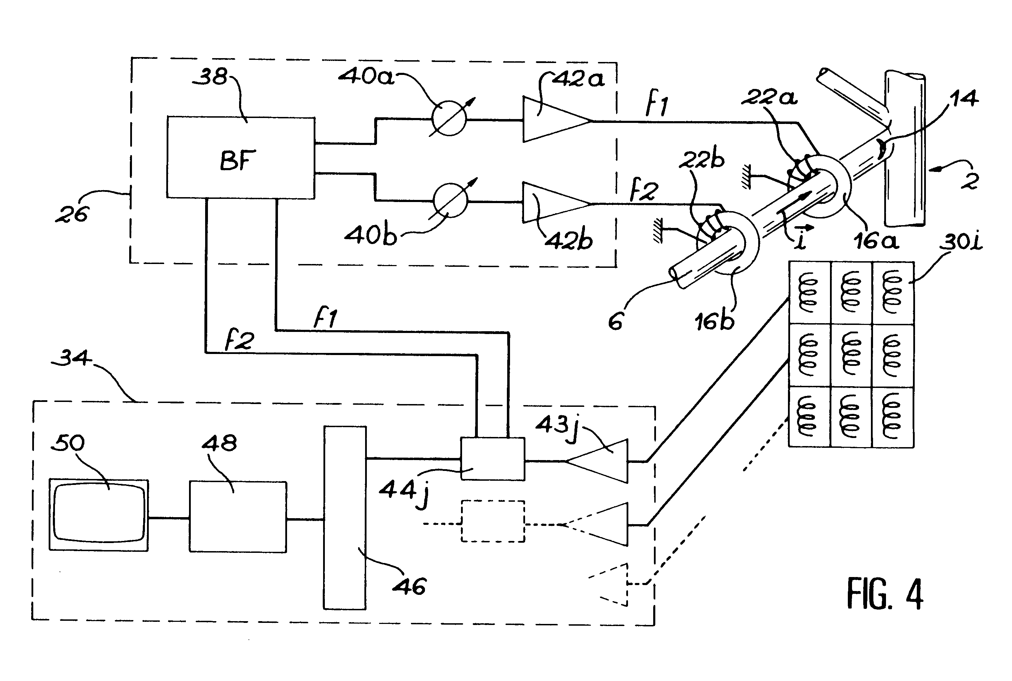

Sur les figures 3 et 4, on a représenté schématiquement deux modes de réalisation des circuits électroniques 26 et 34 respectivement d'injection de courant dans le tube 6 à contrôler et de détection du champ magnétique induit dans ce tube. La réalisation de la figure 3 sert essentiellement à la détection de fissures alors que la réalisation de la figure 4 sert aussi bien à la détection qu'au dimensionnement des fissures.

En pratique, les fissures à détecter telles que 14 sont situées aux noeuds de la structure maillée. Aussi, pour s'affranchir des perturbations électriques engendrées par ces noeuds, il est nécessaire d'utiliser plusieurs circuits d'injection de courants de fréquence différente. En pratique, deux injections de courants de fréquence différente suffisent d'où la représentation de seulement deux circuits d'injection sur les figures 1, 3 et 4.

En référence à la figure 3, l'électronique d'alimentation électrique 26 comporte un générateur basse fréquence 38 délivrant deux courants alternatifs sinusoïdaux de fréquences différentes. Les sorties du générateur BF sont connectées, via des circuits de réglage d'intensité 40a et 40b, à l'entrée de deux amplificateurs de puissance 42a et 42b dont les sorties sont connectées respectivement aux deux enroulements 22 et 25 montés sur une même pince magnétique 16 entourant le tube 6 à contrôler.

Cet agencement permet donc l'injection de deux courants alternatifs de fréquence différente à partir de la même pince magnétique.

Les circuits 40a et 40b du type potentiomètre permettent de régler l'intensité des deux courants électriques injectés dans le tube 6 de façon qu'elles soient égales ou quasi-égales.

Dans le mode representé sur la figure 3, la détection des champs magnétiques induits dans le tube 6 est assurée à l'aide d'un capteur unique 30, représenté ici symboliquement sous forme d'une bobine.

La tension électrique émise par le capteur 30 dont l'amplitude et la phase sont représentatives du courant électrique induit dans le tube à contrôler est amplifiée à l'aide d'un amplificateur linéaire 43, à faible bruit, dont la sortie est connectée à l'entrée de deux circuits de filtrage et de synchronisation 44a et 44b du type détecteur synchrone. La sortie des circuits 44a et 44b est connectée respectivement à deux entrées d'un circuit de multiplexage 46. Les circuits 44a et 44b sont en outre connectés à une sortie du générateur 38 de façon à synchroniser le traitement des signaux issus du capteur 30 avec les fréquences d'excitation de la pince magnétométrique 16.

La figure 3 correspond à une détection synchrone qui est préférable mais non nécessaire. Lorsque cette détection n'est pas synchrone, les circuits 44a et 44b sont de simples filtres qui ne sont pas connectés alors au générateur 38. (Il en est de même pour la figure 4).

Les signaux électriques détectés puis multiplexés sont alors envoyés sur un calculateur 48 du type IBM-PC par exemple pilotant un dispositif de visualisation 50 du type écran de télévision.

Le capteur 30, l'amplificateur 43, les circuits de filtrage et de synchronisation 44a, 44b et le multiplexeur 46 peuvent être intégrés dans une tête de mesure étanche, destinée à l'immersion en mer ; le calculateur 48, le dispositif de visualisation 50 et les circuits d'alimentation électrique 26 sont destinés à une utilisation de surface.

En cas de besoin, il est possible d'effectuer parallèlement la détection avec un contrôle sous-marin de l'amplitude de la tension délivrée par le capteur. Dans ces conditions, un voltmètre (non représenté) équipé d'un écran de visualisation peut être branché en sortie des circuits 44a ou 44b ou un écran de visualisation (non représenté) peut être connecté au multiplexeur 46, le voltmètre et l'écran pouvant être intégrés à la tête de mesure.

Dans la version représentée sur la figure 3 de détection multifréquence à l'aide d'un seul capteur 30, on injecte grâce au générateur basse fréquence 38, dans l'enroulement 22, un courant de fréquence $f_1$ et d'intensité $I_1$, puis, dans l'enroulement 25, un courant de fréquence $f_2$ et d'intensité $I_2$. Les intensités $I_1$ et $I_2$ sont de l'ordre de 0,1 A. $I_1$ et $I_2$ vont induire des intensités de courants dans la structure valant, 1000 fois plus par exemple que les intensités délivrées par le générateur BF.

Il est aussi possible d'injecter un courant de fréquences multiples (ici $f_1$ et $f_2$) dans le même enroulement 22 équipant la pince 16. Dans ce cas, l'amplificateur 42a doit être un amplificateur de puissance sommateur et un circuit 40'b de réglage d'intensité doit être prévu entre le générateur BF et cet amplificateur-sommateur. Le courant électrique délivré en sortie de l'amplificateur-sommateur a une intensité

de $I_1 + I_2$.

Au niveau d'une fissure, le comportement d'un courant "haute fréquence" et celui d'un courant "basse fréquence" sont très différents. Aussi, afin de distinguer les fissures, des défauts de surface, on choisit une fréquence $f_2$ dite "basse" de 50 à 600 Hz et une fréquence $f_1$ dite "haute" de 600 à 1200 Hz.

Le capteur magnétique 30 est alors déplacé à distance fixe par exemple selon la direction x, parallèle au tube à contrôler en balayant la surface de celui-ci. Il délivre successivement deux tensions électriques de fréquence $f_1$ et $f_2$ en synchronisation avec l'excitation électrique dont les amplitudes respectivement $A_1$, $A_2$ et les phases $P_1$, $P_2$ sont représentatives de l'état de surface de l'élément structural à contrôler.

De manière à assurer $A_1 = A_2$ dans le voisinage de la fissure 14 à inspecter, on effectue un réglage simple de l'intensité $I_1$ et $I_2$ des courants grâce aux circuits de réglage d'intensité 40a et 40b.

A l'aide du calculateur 48, on détermine la quantité :

$$\Delta A\% = \frac{A_1 - A_2}{A_1 + A_2}$$

qui vaut 0 en l'absence de fissure et qui est différente de 0 en présence d'une fissure, ainsi que la quantite $P_1 - P_2 = \Delta P$ qui subit aussi une variation en présence d'une fissure. L'évolution des valeurs de A% et de $\Delta P$ en fonction du déplacement du capteur 30 selon x est affichée sur l'écran 50.

Les quantités $\Delta A\%$ et $\Delta P$ donnent une indication sur la présence de la fissure et sur sa profondeur. En effet, plus un courant circule en profondeur, plus sa phase est grande (effet de peau). L'indication sur la longueur de la fissure est donnée par le balayage de la fissure par le capteur.

Le très grand intérêt de ce système est d'être simple et de n'être sensible qu'aux fissures.

Le fait de réaliser un réglage précis des intensités des courants d'excitation n'est pas impératif. On peut alors associer un capteur de référence (fixe ou mobile), non représenté, placé au voisinage de la zone d'inspection et en dehors d'une soudure, au capteur mobile 30 qui assure l'inspection de la structure maillée. Le capteur de référence fournit des tensions de références d'amplitude $A_1^r$, $A_2^r$ et le capteur de mesure 30 engendre des tensions d'amplitude $A_1$ et $A_2$. Le rapport $k = A_1^r/A_2^r$ permet de calculer $A_2' = kA_2$. Le calculateur 48 calcule alors les quantités :

$$\Delta A\% = \frac{A_1 - A_2 k}{A_1 + kA_2} \text{ et } \Delta P = P_1 - P_2$$

L'intérêt de cette approche est de permettre l'utilisation d'un générateur de puissance 38 dont la stabilité en courant n'est pas critique. Les intensités des courants d'injection $I_1$ et $I_2$ dans la pince 16 sont alors ajustées de manière à avoir $A_1 \simeq A_2$ et la mesure du coefficient k permet de tenir compte de la dérive des générateurs.

Le système bifréquence décrit à la figure 3 fournit une amplitude qui est dépendante de l'orientation du capteur 30. Aussi, dans certaines conditions de manipulation (difficulté d'accessibilité à la fissure) l'amplitude peut être nulle et la détermination de $\Delta A\%$ et $\Delta P$ imprecise.

L'utilisation de trois capteurs permet alors d'obtenir les amplitudes des tensions délivrées suivant trois axes orthonormés x, y, z. On exprime alors $\Delta A\%$ sous la forme :

$$\Delta A\% = \frac{\sqrt{A_{1x}^2 + A_{1y}^2 + A_{1z}^2} - \sqrt{A_{2x}^2 + A_{2y}^2 + A_{2x}^2}}{\sqrt{A_{1x}^2 + A_{1y}^2 + A_{1z}^2} + \sqrt{A_{2x}^2 + A_{2y}^2 + A_{2x}^2}}$$

On a supposé ici que $A_1 = A_2$ par réglage avec les circuits 44a et 44b des intensités des courants d'injection dans la pince 16 afin d'alléger les expressions. Comme ci-dessus $\Delta A\%$ est nulle ou différent de 0 respectivement en l'absence ou en présence d'une fissure.

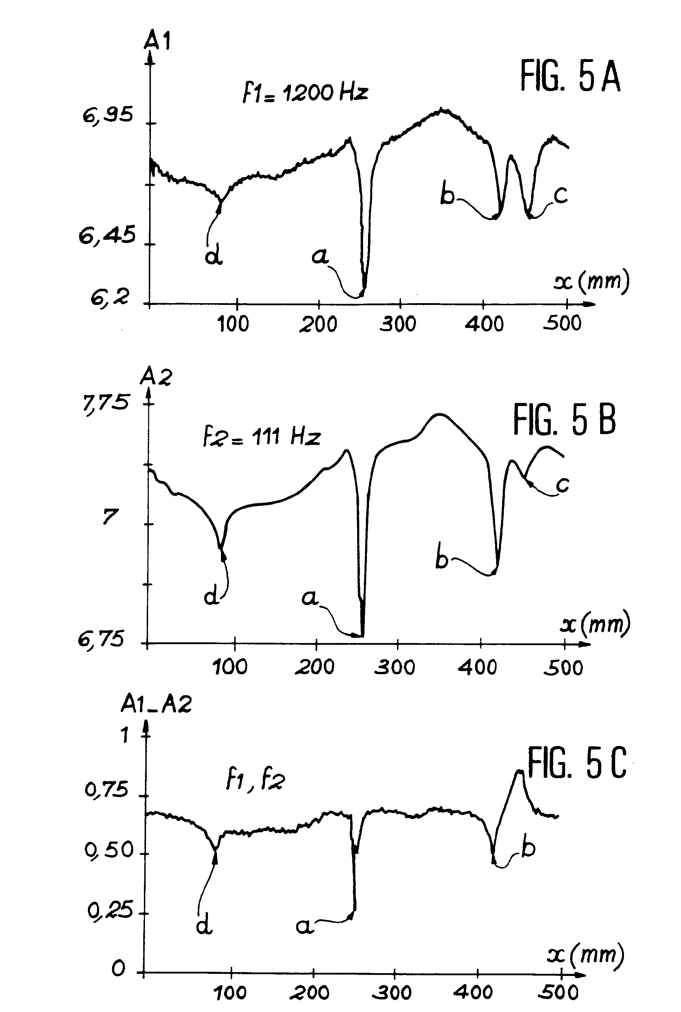

Avec le système représenté sur la figue 3, il a été possible de tracer sur l'écran 50 les courbes représentées sur les figures 5A, 5B et 5C. Ces courbes donnent respectivement les quantités $A_1$, $A_2$ et $A_1$-$A_2$ mesurées au fur et à mesure que l'on se déplace le long du tube 6 à contrôler. La courbe de la figure 5A a été établie pour une fréquence d'excitation $f_1$ de 1200 Hz, la courbe de la figure 5B a été établie pour une fréquence $f_2$ de 111 Hz et la courbe de la figure 5C correspond à un enregistrement différentiel établi pour les deux fréquences d'excitation, 1200 Hz et 111 Hz.

Sur ces trois enregistrements, les baisses de signal a correspondent à une fissure profonde de 5 mm, les baisses d'amplitude b correspondent à une fissure moins profonde de 3 mm, les baisses d'amplitude d correspondent à une fissure de profondeur 1 mm et les baisses d'amplitude c sont dues à un défaut interne.

Ces courbes montrent que l'utilisation de deux fréquences, une "haute" fréquence et une "basse" fréquence, permet de différencier les fissures débouchantes (a, b, d) des défauts internes qui peuvent être des fissures non débouchantes (c) et montrent la sensibilité de la mesure à la profondeur de ces fissures. En particulier, la courbe 5C permet de ne faire ressortir que les effets de fissure et d'éliminer les défauts de surface bien que les courbes 5A et 5B n'en montrent pas. En outre, les courbes des figures 5A et 5B illustrent les comportements différents des courants électriques d'excitation, au niveau des fissures, selon leur fréquence.

L'utilisation de capteurs individuels pose souvent des problèmes de positionnement, et de ce fait, on les utilise essentiellement pour détecter les fissures.

Pour le dimensionnement des fissures en multifréquence, on utilise un réseau de capteurs 30i (avec i allant de 1 à 100) comme représenté sur la figure 4. Le traitement des signaux délivrés par ce réseau de capteurs est similaire à celui des capteurs individuels.

Cette technique est possible car le système d'excitation 16a, 16b qui est torique ne rayonne pas de champ magnétique.

Sur la figure 4, chaque ligne j de capteurs, avec j allant de 1 à 10 dans le cas de 10x10 capteurs, est connectée en sortie à l'entrée d'un amplificateur linéaire 43j à faible bruit, dont la sortie est connectée à un circuit de filtrage et de synchronisation 44j, la sortie de ce dernier étant connectée à l'une des entrées du multiplexeur 46. Pour assurer une détection synchronisée avec les courants d'injection, ces circuits de filtrage 44j sont en outre connectés à une sortie du générateur basse fréquence 38.

Dans le mode de réalisation représenté sur la figure 4, on a dissocié les alimentations en courants du tube à contrôler. A cet effet, les sorties des amplificateurs de puissance 42a et 42b sont connectées respectivement aux circuits primaires 22a et 22b associés à deux pinces magnétiques 16a et 16b montées sur le tube 6 à contrôler. Ainsi, on injecte un courant d'une fréquence donnée $f_1$ par la pince magnétique 16a et un autre courant d'une fréquence différente $f_2$ par la pince 16b.

L'utilisation d'une pince associée à une ou deux bobines pour engendrer deux courants de fréquence différente (figure 3) ou l'utilisation de deux pinces magnétiques équipées chacune d'un enroulement excité par des courants de fréquence différente (figure 4) dépendent de l'utilisation envisagée et en particulier de la puissance que l'on veut transférer des circuits d'alimentation au secondaire du transformateur et des masses respectives des pinces utilisées.

Pour le dimensionnement, les mesures sont menées soit en balayant avec les capteurs la fissure avec des fréquences fixes soit, pour obtenir des mesures plus précises, en rendant fixes les capteurs et en faisant varier une fréquence.

Comme précédemment (figure 3), on utilise les amplitudes et les phases ($Ai_1$, $Ai_2$ ; $Pi_1$, $Pi_2$) délivrées successivement par les capteurs 30i ; leur électronique associée permet de comparer l'ensemble des $Ai_1$ et des $Ai_2$ et de déterminer le coefficient k, qui réalise le meilleur ajustement entre les deux détections aux fréquences $f_1$ et $f_2$ respectivement. On calcule ensuite de façon relative les Ai% et les Pi grâce au calculateur 48.

Lorsque les capteurs 30i constituent un réseau plan régulier (10x10), on dispose de Ai% et Pi répartis selon une grille (ou matrice). Ces indications sont positionnées les unes par rapport aux autres, sous forme matricielle, sur l'écran de visualisation 50. De même, il est aussi possible de faire apparaître sur l'écran, sous forme bidimensionnelle, les mesures $Ai_1$, $Ai_2$ et les Pi.

La détermination de la longueur de la fissure est immédiate parce qu'elle est directement visualisée sur les mesures de ΔAi%. Pour la profondeur, on effectue une comparaison avec des données obtenues par modélistion théorique à partir de codes de calcul du type TRIFOU commercialisé par la Sociéte EDF.

Dans la pratique, une évaluation approximative à 10% près est suffisante.

Au lieu de faire apparaître les valeurs des $Ai_1$, $Ai_2$, ΔAi%, Pi et ΔPi sur l'écran de visualisation, il est possible de faire apparaître l'anomalie sous forme d'une cartographie du champ magnétique telle que représentée sur la figure 6. L'axe z donne l'amplitude A des champs magnétiques détectés, l'axe ox est celui des courants électriques injectés dans le tube 6 à contrôler et l'axe oy représente l'axe de la fissure et celui de la mesure par les capteurs (capteurs orientés selon oy). Autrement dit, les axes x et y représentent les directions de balayage d'un capteur ou du réseau de capteurs.

Cette cartographie permet de déterminer toutes les caractéristiques de la fissure correspondant au creux central. La longueur de la fissure est donnée par l'axe y et la profondeur est obtenue par comparaison de la cartographie avec le code de calcul précédent.

Dans le cas représenté, la fissure détectée présente une profondeur de 5 mm, une longueur de 3 cm et une largeur de 0,5 mm.

Cette cartographie a eté effectuée avec un réseaux de détecteurs de type inductif, placés à 5 mm de la pièce à contrôler et un transformateur alimenté à 1200 Hz.

La technique de détection et de dimensionnement de fissures selon l'invention est très intéressante, car l'inspection est possible sans système robotisé sophistiqué. En particulier, dans le cas d'inspection sous-marine, le plongeur peut effectuer un suivi de la fissure et l'interprétation des signaux délivrés par les capteurs, pour le dimensionnement de la fissure, peut être faite en temps différé, les informations étant stockées dans l'ordinateur 48.

Le procédé de l'invention permet par exemple la détection et le dimensionnement de fissures transversales de quelques centimètres de long, et de 1 mm de profondeur.

## Revendications

1. Procédé de détection et/ou de dimensionnement d'une fissure (14) dans une structure métallique (2) maillée conductrice de l'électricité comportant des éléments structuraux (4, 6, 8, 10) constituant un circuit électrique fermé (12, 13) consistant à :
   - entourer l'un des éléments structuraux (6) avec au moins un circuit magnétique (16, 16a, 16b, 17) fermé en forme de pince,
   - former au moins un transformateur en enroulant un bobinage (22, 22a, 22b, 25) sur une partie (18, 20) du circuit magnétique pour constituer le circuit primaire, la structure métallique maillée constituant le circuit secondaire de ce transformateur,

- alimenter en courant alternatif ou impulsionnel basse fréquence le circuit primaire du transformateur, à l'aide d'au moins un circuit d'alimentation électrique (38, 40a-42a, 40b-42b) pour créer longitudinalement dans l'élément structural (6) à contrôler un courant électrique alternatif ou impulsionnel basse fréquence de forte intensité grâce au transformateur,

- déplacer au moins un capteur magnétique (30, 30i) le long de l'élément à contrôler (6), et

- mesurer le champ magnétique induit par le courant électrique circulant dans le circuit électrique fermé, à l'aide dudit capteur.

2. Procédé selon la revendication 1, caractérisé en ce que la structure est un pylône immergé dans de l'eau.

3. Procédé selon la revendication 1 ou 2, caractérisé en ce que l'on traite (43-48) le signal électrique fourni par le capteur magnétique (30) puis visualise (50) le signal traité pour en déduire la présence ou la présence et le dimensionnement de la fissure.

4. Procédé selon l'une quelconque des revendications 1 à 3, caractérisé en ce que l'on utilise plusieurs capteurs magnétiques (30i) disposés à proximité de la fissure pour mesurer le champ magnétique induit.

5. Procédé selon l'une quelconque des revendications 1 à 4, caractérisé en ce que l'on effectue une cartographie du champ magnétique induit au voisinage de la fissure.

6. Procédé selon l'une quelconque des revendications 1 à 5, caractérisé en ce que l'on effectue une détection des champs magnétiques induits dans le circuit électrique fermé (12), synchronisée avec l'alimentation électrique du circuit primaire du transformateur à l'aide d'un circuit de synchronisation (44a, 44b, 44d) connecté aux différents capteurs (30, 30i).

7. Procédé selon l'une quelconque des revendications 4 à 6, caractérisé en ce que les capteurs magnétiques (30i) ont leur axe de mesure disposé parallèlement entre eux, et sont groupés suivant une barette ou une grille.

8. Procédé selon l'une quelconque des revendications 1 à 7, caractérisé en ce que l'on délivre dans l'élément structural (6) à contrôler des courants de fréquence basse différente en utilisant plusieurs circuits d'alimentation électrique (38, 40a-42a, 40b-42b).

9. Procédé selon l'une quelconque des revendications 1 à 8, caractérisé en ce que l'on crée plusieurs courants de forte intensité et de fréquence différente dans l'élément structural à contrôler à l'aide de plusieurs transformateurs dont les circuits primaires (22a, 22b, 22, 25) sont alimentés par des courants de fréquence différente.

10. Procédé selon l'une quelconque des revendications 1 à 8, caractérisé en ce que l'on alimente le circuit primaire (22) du transformateur avec un courant de plusieurs fréquences à l'aide d'un seul circuit d'alimentation électrique (38, 40a, 40'b, 42a).

11. Procédé selon l'une quelconque des revendications 1 à 10, caractérisé en ce que l'on protège électriquement le circuit magnétique (16, 17, 16a, 16b) en le revêtant d'un revêtement externe (28a, 28b) de protection en isolant électrique.

12. Procédé selon l'une quelconque des revendications 1 à 11, caractérisé en ce que l'on isole électriquement le circuit magnétique et l'élément structural à l'aide d'un matériau isolant électrique (28a, 28b).

13. Procédé selon l'une quelconque des revendications 8 à 12, caractérisé en ce que l'on effectue un réglage (40a, 40'b, 40b) de l'intensité des courants injectés dans la structure.

14. Procédé selon l'une quelconque des revendications 1 à 13, caractérisé en ce que le circuit magnétique (16) est constitué de deux parties (18, 20) que l'on assemble autour de l'élément structural du circuit électrique fermé, de façon à former un circuit magnétique fermé, l'une des deux parties étant équipée du circuit primaire (22, 25).

15. Procédé selon l'une quelconque des revendications 1 à 14, caractérisé en ce que l'on utilise au moins deux circuits magnétiques disposés sur des éléments structuraux de deux mailles distinctes de la structure.

16. Procédé selon l'une quelconque des revendications 1 à 15, caractérisé en ce que l'on effectue la mesure du champ magnétique à distance (D) du circuit magnétique.

**Patentansprüche**

1. Verfahren zur Detektion und/oder Dimensionierung eines Risses (14) in einer elektrisch leitenden netzförmigen Metallstruktur (2), welche Strukturelemente (4, 6, 8, 10) umfaßt, die eine geschlossene elektrische Schaltung (12, 13) bilden, das daraus besteht:
   - eines der Strukturelemente (6) mit mindestens einem geschlossenen Magnetkreis (16, 16a, 16b, 17) in Form einer Klemme zu umfassen,
   - mindestens einen Transformator zu bilden, indem es eine Spule (22, 22a, 22b, 25) auf einem Teil (18, 20) des Magnetkreises umwickelt, um die erste Schaltung zu bilden, wobei die netzförmige Metallstruktur die zweite Schaltung dieses Transformators bildet,
   - die erste Schaltung des Transformators mit einem Wechselstrom oder mit niedriger Frequenz gepulsten Strom mithilfe von mindestens einer elektrischen Speiseschaltung (38, 40a-42a, 40b-42b) zu versorgen, um mittels dem Transformator longitudinal in dem zu kontrollierenden Strukturelement (6) einen elektrischen Wechselstrom oder mit niederer Frequenz gepulsten Strom mit hoher Intensität zu erzeugen,
   - mindestens einen magnetischen Fühler (30, 30i) längs des zu kontrollierenden Elements (6) zu verschieben, und
   - das durch den, in der geschlossenen elektrischen Schaltung zirkulierenden, elektrischen Strom induzierte magnetische Feld mithilfe des besagten Fühlers zu messen.

2. Verfahren gemäß Anspruch 1, dadurch gekennzeichnet, daß die Struktur ein in Wasser eingetauchter Pylon ist.

3. Verfahren gemäß den Ansprüchen 1 oder 2, dadurch gekennzeichnet, daß man das von dem magnetischen Fühler (30) gelieferte elektrische Signal verarbeitet (43-48), dann das verarbeitete Signal anzeigt (50), um auf das Vorhandensein oder nicht Vorhandensein und die Dimension des Risses zu schließen.

4. Verfahren gemäß einem der Ansprüche 1 bis 3, dadurch gekennzeichnet, daß man mehrere magnetische Fühler (30i) verwendet, die in der Nähe des Risses angeordnet sind, um das induzierte magnetische Feld zu messen.

5. Verfahren gemäß einem der Ansprüche 1 bis 4, dadurch gekennzeichnet, daß man eine Kartographierung des induzierten magnetischen Feldes in der Umgebung des Risses durchführt.

6. Verfahren gemäß einem der Ansprüche 1 bis 5, dadurch gekennzeichnet, daß man eine Detektion des induzierten Magnetfeldes in der geschlossenen elektrischen Schaltung (12) ausführt, die mit der elektrischen Speisung der ersten Schaltung des Transformators mithilfe einer Synchronisationsschaltung (44a, 44b, 44d), welche mit den verschiedenen Fühlern (30, 30i) verbunden ist, synchronisiert.

7. Verfahren gemäß einem der Ansprüche 4 bis 6, dadurch gekennzeichnet, daß die magnetischen Fühler (30i) ihre Messachse zueinander parallel angeordnet haben und entsprechend einem Bündel oder einem Gitter angeordnet sind.

8. Verfahren gemäß einem der Ansprüche 1 bis 7, dadurch gekennzeichnet, daß man an das zu kontrollierende Strukturelement (6) Ströme mit verschiedener niedriger Frequenz liefert, indem man mehrere elektrische Speiseschaltungen (38, 40a-42a, 40b-42b) verwendet.

9. Verfahren gemäß einem der Ansprüche 1 bis 8, dadurch gekennzeichnet, daß man mehrere Ströme mit hoher Intensität und verschiedener Frequenz in dem zu kontrollierenden Strukturelement mithilfe mehrerer Transformatoren erzeugt, deren erste Schaltungen (22a, 2b, 22, 25) durch Ströme verschiedener Frequenz gespeist werden.

10. Verfahren gemäß einem der Ansprüche 1 bis 8, dadurch gekennzeichnet, daß man die erste Schaltung (22) des Transformators mit einem Strom verschiedener Frequenzen mithilfe einer einzigen elektrischen Speiseschaltung (38, 40a, 40'b, 42a) speist.

11. Verfahren gemäß einem der Ansprüche 1 bis 10, dadurch gekennzeichnet, daß man den Magnetkreis (16, 17, 16a, 16b) elektrisch schützt, indem man ihn zur elektrischen Schutzisolierung mit einer äußeren Schutzverkleidung (28a, 28b) verkleidet.

12. Verfahren gemäß einem der Ansprüche 1 bis 11, dadurch gekennzeichnet, daß man den Magnetkreis und das Strukturelement mithilfe eines elektrischen isolierenden Materials (28a, 28b) elektrisch isoliert.

13. Verfahren gemäß einem der Ansprüche 8 bis 12, dadurch gekennzeichnet, daß man eine Regulierung (40a, 40'b, 40b) der Intensität des in die Struktur eingeführten Stroms ausführt.

14. Verfahren gemäß einem der Ansprüche 1 bis 13, dadurch gekennzeichnet, daß der Magnetkreis (16) aus zwei Teilen (18, 20) gebildet wird, die man um das Strukturelement der geschlossenen elektrischen Schaltung anbringt, so daß man einen geschlossenen Magnetkreis bildet, wobei einer der beiden Teile mit einer ersten Schaltung (22, 25) ausgestattet ist.

15. Verfahren gemäß einem der Ansprüche 1 bis 14, dadurch gekennzeichnet, daß man mindestens zwei Magnetkreise verwendet, die auf den Strukturelementen der beiden getrennten Netze der Struktur angeordnet sind.

16. Verfahren gemäß einem der Ansprüche 1 bis 15, dadurch gekennzeichnet, daß man die Messung des Magnetfeldes im Abstand (D) des Magnetkreises ausführt.

**Claims**

1. Process for the detection and/or dimensioning of a crack (14) in an electricity-conducting metal lattice structure (2) having structural elements (4, 6, 8, 10) constituting a closed electric circuit (12, 13), said process comprising surrounding one of the structural elements (6) with at least one clip-like closed magnetic circuit (16, 16a, 16b, 17), forming at least one transformer by winding a coil (22, 22a, 22b, 25) over part (18, 20) of the magnetic circuit so as to form the primary circuit, the metal lattice structure constituting the secondary circuit of said transformer, supplying with low frequency pulsed or alternating current the primary circuit of the transformer with the aid of at least one electric supply circuit (38, 40a-42a, 40b-42b) in order to longitudinally create in the structural element (6) to be inspected a low frequency, high intensity pulsed or alternating current as a result of the transformer, displacing at least one magnetic sensor (30, 30i) along the element (6) to be inspected and measuring the magnetic field induced by the current flowing in the closed electric circuit with the aid of said sensor.

2. Process according to claim 1, characterized in that the structure is a pylon submerged in the water.

3. Process according to claims 1 or 2, characterized in that the electrical signal supplied by the magnetic sensor (30) is processed (43-48) and then the processed signal is displayed (50), in order to deduce therefrom the presence or absence and the dimensions of the crack.

4. Process according to any one of the claims 1 to 3, characterized in that use is made of several magnetic sensors (30i) positioned in the vicinity of the crack for measuring the induced magnetic field.

5. Process according to any one of the claims 1 to 4, characterized in that a cartography is performed of the magnetic field induced in the vicinity of the crack.

6. Process according to any one of the claims 1 to 5, characterized in that a detection takes place of the magnetic fields induced in the closed electric circuit (12), synchronized with the electric supply of the primary circuit of the transformer with the aid of a synchronization circuit (44a, 44b, 44d) connected to the different sensors (30, 30i).

7. Process according to any one of the claims 4 to 6, characterized in that the magnetic sensors (30i) have their measuring axis parallel to one another and are grouped in accordance with a strip or grid.

8. Process according to any one of the claims 1 to 7, characterized in that to the structural element (6) to be inspected are supplied currents having a different low frequency using several power supply circuits (38, 40a-42a, 40b-42b).

9. Process according to any one of the claims 1 to 8, characterized in that several high intensity currents and of different frequency are produced in the structural element to be inspected with the aid of several transformers, whose primary circuits (22a, 22b, 22, 25) are supplied by currents of different frequency.

10. Process according to any one of the claims 1 to 8, characterized in that the primary circuit (22) of the transformer is supplied with a current having several frequencies with the aid of a single power supply circuit (38, 40a, 40'b, 42a).

11. Process according to any one of the claims I to 10, characterized in that the magnetic circuit (16, 17, 16a, 16b) is electrically protected by covering it with an outer covering (28a, 28b) of an electrically insulating material.

12. Process according to any one of the claims 1 to 11, characterized in that the magnetic circuit and the structural element are electrically insulated with the aid of an electrically insulating material (28a, 28b).

13. Process according to any one of the claims 8 to 12, characterized in that the intensity of the currents injected into the structure is regulated (40a, 40'b, 40b).

14. Process according to any one of the claims 1 to 13, characterized in that the magnetic circuit (16) is formed from two parts (18, 20), which are assembled around the structural element of the closed electric circuit, so as to form a closed magnetic circuit, one of the two parts being equipped with the primary circuit (22, 25).

15. Process according to any one of the claims 1 to 14, characterized in that use is made of at least two magnetic circuits placed on structural elements of two separate links of the structure.

16. Process according to any one of the claims 1 to 15, characterized in that the magnetic field is measured at a distance (D) from the magnetic circuit.

FIG. 1

FIG. 2A

FIG. 2B

FIG. 3

EP 0 505 421 B1

FIG. 4

EP 0 505 421 B1

FIG. 5 A

FIG. 5 B

FIG. 5 C

FIG. 6

EP 0 505 421 B1